# EUROPÄISCHE PATENTSCHRIFT

(11) **EP 3 105 435 B1**
(45) Veröffentlichungstag und Bekanntmachung des Hinweises auf die Patenterteilung: **03.07.2019**
(21) Anmeldenummer: 15702785.5
(22) Anmeldetag: 05.02.2015
(51) Int. Cl.: F02C 7/143, F02C 9/20

(54) **VERFAHREN UND ANORDNUNG ZUM BETRIEBEN EINER GASTURBINENAINLAGE IM TEILLASTBETRIEB**
METHOD AND DEVICE TO OPERATE A GAS TURBINE INSTALLATION IN PARTIAL LOAD OPERATION
PROCÉDÉ ET DISPOSITIF POUR LE FONCTIONNEMENT D'UNE INSTALLATION DE TURBINE À GAZ EN MODE DE CHARGE PARTIELLE

(30) Priorität: 12.02.2014 EP 14154803
(43) Veröffentlichungstag der Anmeldung: 21.12.2016
(73) Patentinhaber: Siemens Aktiengesellschaft, 80333 München (DE)
(72) Erfinder: LARSON, Marco, 45476 Mülheim (DE); SAVILIUS, Nicolas, 45359 Essen (DE)
(86) Internationale Anmeldenummer: PCT/EP2015/052412
(87) Internationale Veröffentlichungsnummer: WO 2015/121146

(56) Entgegenhaltungen:
- EP-A1- 2 642 092
- EP-A2- 2 180 165
- DE-A1- 3 333 437

## Beschreibung

Die Erfindung betrifft ein Verfahren zum Betreiben einer Gasturbinenanlage in einem Teillastbetrieb und eine Anordnung zur Steuerung einer Gasturbinenanlage in einem Teillastbetrieb sowie eine Gasturbinenanlage aufweisend eine Verdichtervorleitschaufelverstelleinrichtung.

Gasturbinenanlagen bzw. Gasturbinen werden unter anderem zur Energieerzeugung in Gaskraftwerken betrieben. Die konstruktive bzw. verfahrenstechnische Auslegung und Optimierung von Gasturbinen zielt üblicherweise auf einen möglichst wirtschaftlichen und abgasemissionsarmen Nennlast- bzw. Volllastbetrieb ab.

Ein Betreiben einer Gasturbinenanlage in einem Teillastbetrieb - also mit einer Leistung unterhalb der Nennlast, d.h. überwiegend außerhalb eines primären Auslegungsbereichs der Gasturbinenanlage - ist deshalb insbesondere bezüglich der erzielbaren Wirkungsgrade und Abgasemissionswerte problematisch.

Gasturbinenanlagen, kurz im Folgenden Gasturbinen, sind Verbrennungskraftmaschinen, die Umgebungsluft ansaugen, diese in einem Verdichter verdichten, aus dieser verdichteten Umgebungsluft und einem Brennstoff in einer Brennkammer bzw. Brennereinheit ein zündfähiges Strömungsmedium herstellen, dieses zünden und in einer Turbine bzw. Turbineneinheit entspannen, wobei eine so freiwerdende thermische Energie in eine rotatorische mechanische Energie gewandelt wird. Die dabei in der Turbine generierte mechanische Leistung wird, neben dem Teil, der zur Umwandlung in elektrische Leistung durch einen der Gasturbinenanlage nachgeschalteten Generator genutzt werden kann, zum Teil auch an den Verdichter zur Verrichtung von Kompressionsarbeit abgeführt.

Ausgehend von einem Betrieb der Gasturbine bei Nennlast bzw. oberhalb einer beabsichtigten Teillast wird zur Verringerung der Gasturbinen-Leistung, also zum Betreiben der Gasturbine im Teillastbetrieb, üblicherweise ein Brennstoffmassenstrom in die Brennereinheit reduziert und/oder ein Verdichteransaugluftmassenstrom verringert.

Die Verringerung des Verdichteransaugluftmassenstroms wird üblicherweise mit einer variablen Verdichtervorleitschaufel erreicht, d.h. durch eine Verdichtervorleitschaufelverstelleinrichtung der Gasturbine vorgenommen, wobei in diesem Zusammenhang auch von einer Androsselung gesprochen wird. Durch die Androsselung soll ein Brennstoff-Luft-Verhältnis für die Verbrennung erreicht werden, das einen möglichst brennstoffeffizienten und abgasemissionsarmen Teillastbetrieb der Gasturbine erlaubt.

Die maximal zulässige Androsselung, also die maximal zulässige Verstellung der variablen Verdichtervorleitschaufel und damit der Verstellbereich im Teillastbetrieb, ist dabei durch die unterdruckbedingte Expansion der Umgebungsluft im Ansaugbereich des Verdichters limitiert:
In Abhängigkeit der Temperatur und Feuchte der Ansaugluft kann es bei Über- bzw. Unterschreiten eines Verdichtervorleitschaufelverstellungsgrenzwerts zu einer Vereisungen bzw. zu einer Eisbildung im Verdichter der Gasturbinenanlage kommen. Infolgedessen kann es zu einer Beeinträchtigung der sog. Maschinenintegrität und ggf. zu Maschinenschäden kommen.

Aus dem Stand der Technik sind verschiedene Verfahren zum Betreiben einer Gasturbinenanlage im Teillastbetrieb bekannt, insbesondere um eine Vereisung im Verdichter der Gasturbine zu verhindern.

Eine solches Verfahren für eine Gasturbinenanlage ist etwa aus der EP 2 180 165 bekannt, wobei ein Wärmetauscher und eine Einheit zur Luftkonditionierung dazu dienen, die durch die Gasturbinenanlage eingesaugte Luft ausreichend mit Wärmeenergie zu versorgen. Die Wärmezufuhr mittels Wärmetauscher wird hierbei etwa zu einem Zeitpunkt eingeleitet, wenn die angesaugte Luft eine Temperatur aufweist, die unter einem Grenzwert, etwa 40°C liegt, und wenn etwa die Temperatur um weniger als 10°C von der aktuellen Taupunkttemperatur entfernt ist. Um diesen Vorgang zu unterstützen, kann auch noch vorgesehen sein, dass die Verdichtervorleitschaufeln geeignet verfahren werden.

Eine Temperaturkonditionierung zur Beeinflussung der Temperatur der Einlassluft einer Gasturbine ist auch in der EP 2642092A1 beschrieben. Hierbei ist die Gasturbine in einer kombinierten Gas- und Dampfkraftwerksanlage integriert und die Temperaturkonditionierung wird derart vorgenommen, dass die Dampftemperatur im Dampfteil der kombinierten Gas- und Dampfkraftwerksanlage bei oder über einer Solltemperatur zu liegen kommt. Gleichzeitig können die Verdichtervorleitschaufeln der Gasturbine zusätzlich diesen Regelungsvorgang unterstützen, indem auch ihre Stellung von dieser Dampftemperatur abhängig gemacht wird.

Bei keiner der aus dem Stand der Technik bekannten Schriften ist jedoch bekannt, einen Verdichtervorleitschaufel-verstellungsgrenzwert vorteilhaft zu bestimmen, um eine brennstoffeffziente Regelung der Verdichtervorleitschaufelverstellung zu erreichen. Insbesondere können die Verfahren bzw. Vorrichtungen aus dem Stand der Technik gar keine Aussagen zu der Definition eines Verdichtervorleitschaufelverstellungsgrenzwerts im erfindungsgemäßen Sinn machen.

Es ist somit eine Aufgabe der Erfindung, eine vorteilhafte technische Lehre zum Betreiben einer Gasturbinenanlage in einem Teillastbetrieb anzugeben. Insbesondere liegt der Erfindung die Aufgabe zugrunde, einen brennstoffeffizienten und abgasemissionsarmen Teillastbetrieb einer Gasturbinenanlage durch eine Erweiterung der Verdichtervorleitschaufelverstellbereichs zu erreichen, weleher mittels wenigstens eines Verdichtervorleitschaufelverstellungsgrenzwerts bestimmt ist.

Diese Aufgabe wird erfindungsgemäß gelöst mit einem Verfahren zum Betreiben einer Gasturbinenanlage in einem Teillastbetrieb, einer Anordnung zur Steuerung einer Gasturbinenanlage in einem Teillastbetrieb und einer Gasturbinenanlage aufweisend eine Verdichtervorleitschaufelverstelleinrichtung mit den Merkmalen des jeweiligen unabhängigen Anspruchs. Zweckmäßige Ausgestaltungen und Vorteile der Erfindung ergeben sich aus den weiteren Ansprüchen und der Beschreibung und beziehen sich auf das Verfahren, die Anordnung und die Gasturbinenanlage.

Bei dem Verfahren wird bei einem gegebenen Zustand eines in einen Verdichter der Gasturbinenanlage einströmenden Mediums eine Verdichtervorleitschaufelverstellung für den Teillastbetrieb eingeleitet.

Der gegebene Zustand des einströmenden Mediums kann durch zumindest eine Zustandsgröße wie eine Temperatur, eine Feuchte bzw. eine Feuchtigkeit, einen Druck, also insbesondere durch Zahlenwerte dieser Zustandsgrößen, gegeben sein. Dabei meint "gegeben" in diesem Zusammenhang auch "vorliegend", "vorherrschend" und/oder "messbar" bzw. "ermittelbar". Das in den Verdichter der Gasturbinenanlage einströmende Strömungsmedium kann insbesondere Umgebungsluft bzw. Ansaugluft sein. Die Verdichtervorleitschaufelverstellung kann eine Verstellung einer variablen, also verstellbaren, Verdichtervorleitschaufel (Verdichtervorleitschaufelreihe) sein. Die Verstellung ist nicht notwendigerweise auf die Verdichtervorleitschaufel bzw. Verdichtervorleitschaufelreihe beschränkt, sondern kann auch weitere Leitschaufelreihen, insbesondere 1 bis 5 weitere Leitschaufelreihen, umfassen. In diesem Kontext und im Folgenden kann sich "eingeleitet" bzw. "Einleitung" zum einen auf das Auslösen der Verstellung bzw. einer Maßnahme als solches, beispielsweise durch eine Betätigung und/oder eine Ansteuerung einer entsprechenden Einrichtung, zum anderen auf eine Wirkung der Verstellung bzw. Maßnahme in einem verfahrens- bzw. prozesstechnischen Sinn beziehen.

Durch die Verdichtervorleitschaufelverstellung kann auf einfache Weise eine Verringerung des Ansaugluftmassenstromes in den Verdichter der Gasturbinenanlage erreicht werden. Folglich kann in einem Teillastbetrieb der Gasturbinenanlage bei einem reduzierten Brennstoffmassenstrom ein nahezu konstantes Luft-Brennstoff-Verhältnis realisiert werden, was in vorteilhaft niedrigen Emissionswerten und konstant hohen Abgastemperaturen resultiert. Die resultierende hohe Abgastemperatur ist insbesondere vorteilhaft für einen nachgeschalteten Dampfprozess in einem gekoppelten Gasturbinen-Dampf-Kraftwerk nutzbar.

Ein Wert der eingeleiteten Verdichtervorleitschaufelverstellung wird mit einem Verdichtervorleitschaufelverstellungsgrenzwert, der in einer Abhängigkeit von dem Zustand des in den Verdichter der Gasturbinenanlage einströmenden Mediums ermittelbar ist, verglichen.

Unter "ermittelbar" ist im gegebenen Zusammenhang und im Folgenden eine zweckmäßige Möglichkeit zu einer Bestimmung, einer Feststellung, einer Messung - jeweils in mittelbarer oder unmittelbarer Weise - oder einer Berechnung eines Wertes zu verstehen. Die Wendung "verglichen" bzw. "vergleichen" bezieht sich auf einen zahlenmäßigen Abgleich zweier Werte, insbesondere vorgenommen durch eine mit einer durch eine technische Einrichtung realisierten Differenzbildung.

Der Verdichtervorleitschaufelverstellungsgrenzwert ist ein aus verfahrens- und/oder sicherheitstechnischen Gründen einzuhaltender Grenzwert der Verstellung der Verdichtervorleitschaufel bzw. Leitschaufel (Leitschaufelreihen), bei dessen Nichteinhaltung eine Eisbildung bzw. Vereisung des Verdichters - und folglich eine Beeinträchtigung einer Gasturbinenfunktion bzw. ein Ausfall der Gasturbine - eintreten kann.

Die Ermittlung des Verdichtervorleitschaufelverstellungsgrenzwertes in Abhängigkeit von dem Zustand des in den Verdichter der Gasturbinenanlage einströmenden Mediums, beispielsweise in Abhängigkeit von der tatsächlichen Ansauglufttemperatur und/oder der tatsächlichen Ansaugluftfeuchte, ist besonders vorteilhaft: Gegenüber dem üblichen Worst-Case-Szenario (Verdichtervorleitschaufelverstellungsgrenzwert ermittelt/festgelegt auf Basis einer minimal anzunehmenden Ansauglufttemperatur und einer maximal anzunehmenden Ansaugluftfeuchte) kann ein erweiterter Verstellbereich der Verdichtervorleitschaufelverstellung erzielt werden. Infolgedessen kann ein brennstoffeffizienterer und schadstoffemissionsärmerer Teillastbetrieb der Gasturbine, insbesondere bei hohen Ansaugluftemperaturen und niedrigen Ansaugluftfeuchten ermöglicht werden.

Wenn der Wert der eingeleiteten Verdichtervorleitschaufelverstellung bezüglich des Verdichtervorleitschaufelverstellungsgrenzwertes eine vorgegebene Bedingung erfüllt, wird zumindest eine Maßnahme zur Veränderung des Zustands des in den Verdichter der Gasturbinenanlage im Teillastbetrieb einströmenden Mediums eingeleitet.

Die Bedingung kann ein Überschreiten oder Erreichen eines oberen Grenzwertes oder ein Unterschreiten oder Erreichen eines unteren Grenzwertes für die Verdichtervorleitschaufelverstellung sein. Beispielsweise ist eine Bedingung das Überschreiten eines Grenzwinkels der Verdichtervorleitschaufelverstellung - der beispielsweise in Abhängigkeit der Ansaugluftfeuchte und Ansauglufttemperatur ermittelbar ist und oberhalb dessen eine Verdichtervereisung eintreten kann.

Durch die Veränderung des Zustands - beispielsweise einer Temperatur und/oder einer Feuchte - des in den Verdichter der Gasturbinenanlage im Teillastbetrieb einströmenden Mediums - insbesondere der Ansaugluft - wird auf vorteilhafte Weise eine Beeinflussung des Verdichtervorleitschaufelverstellungsgrenzwertes erreicht. So kann von besonderem Vorteil eine Erweiterung der zulässigen Verdichtervorleitschaufelverstellung -insbesondere bei niedrigen Umgebungslufttemperaturen und Umgebungsluftfeuchten - erreicht werden. Von besonderem Vorteil wird also ein Teillastbetrieb einer Gasturbinenanlage erreicht, der auch deutlich außerhalb eines ursprünglichen Auslegungsbereichs der Gasturbinenanlage einen brennstoffeffizienten und schadstoffemissionsarmen Betrieb bei besonderes geringen Gasturbinenleistungen bei besonders niedrigen Umgebungslufttemperaturen und/oder Umgebungsluftfeuchten zulässt.

Die Erfindung sieht außerdem eine Anordnung zur Steuerung einer Gasturbinenanlage in einem Teillastbereich vor. Die Anordnung weist eine Stelleinrichtung, eine Ermittlungseinrichtung und eine Steuereinheit auf.

Die Stelleinrichtung ist derart eingerichtet, dass bei einem gegebenen Zustand eines in einen Verdichter der Gasturbinenanlage einströmenden Mediums eine Verdichtervorleitschaufelverstellung einleitbar ist.

Beispielsweise ist durch die Stelleinrichtung eine variable Verdichterleitschaufelreihe der Gasturbinenanlage verstellbar, insbesondere verstellbar in einem Anstellwinkel gegen eine Hauptströmungsrichtung der Ansaugluft des Verdichters.

Die Ermittlungseinrichtung ist derart eingerichtet, dass ein Verdichtervorleitschaufelverstellungsgrenzwert in einer Abhängigkeit von dem Zustand des in den Verdichter der Gasturbinenanlage einströmenden Mediums ermittelbar ist und ein Wert der einleitbaren Verdichtervorleitschaufelverstellung mit dem Verdichtervorleitschaufelverstellungsgrenzwert vergleichbar ist.

Die Ermittelbarkeit kann sich auf eine Möglichkeit zur Auswertung, Berechnung - jeweils insbesondere auf Basis eines einmalig gemessenen oder errechneten bzw. simulierten Kennfeldes bzw. eines mehrdimensionalen funktionalen Zusammenhanges - in Kombination mit einer Messung und/oder Berechnung, beispielsweise einer Ansauglufttemperatur und/oder -feuchte, beziehen. Beispielsweise kann die Ermittelbarkeit hardware-, software- und/oder hardware- und softwarebasiert in der Ermittlungseinrichtung implementiert sein.

Die Steuereinheit ist derart eingerichtet, dass zumindest eine Maßnahme zur Veränderung des Zustands des in den Verdichter der Gasturbinenanlage im Teillastbetrieb einströmenden Mediums einleitbar ist, wenn der Wert der eingeleiteten Verdichtervorleitschaufelverstellung bezüglich des Verdichtervorleitschaufelverstellungsgrenzwertes eine vorgegebene Bedingung erfüllt.

Beispielsweise kann die Steuereinheit in der Weise eingerichtet sein, dass Nebenaggregate und/oder Einrichtungen der Gasturbinenanlage, insbesondere Heiz- und/oder Kühl- und/oder Trocknungs- und/oder Befeuchtungseinrichtungen, jeweils zur Einwirkung auf den Zustand der Ansaugluft, ansteuerbar - also zumindest ein- und abschaltbar sind. Insbesondere kann die Steuereinheit zur Ansteuerung einer Anti-Icing-Einrichtung und/oder einer Ansaugluft-Heizeinrichtung und/oder eines Evap-Coolers vorbereitet sein.

Die Erfindung sieht außerdem eine Gasturbinenanlage aufweisend eine Verdichtervorleitschaufelverstelleinrichtung vor. Eine besonders vorteilhaft im Teillastbetrieb betreibbare Gasturbinenanlage kann erreicht werden, wenn sie eine Anti-Icing-Einrichtung und/oder eine Ansaugluft-Heizeinrichtung und die erfindungsgemäße Anordnung aufweist.

Bevorzugte Weiterbildungen der Erfindung ergeben sich auch aus den abhängigen Ansprüchen. Die Weiterbildungen beziehen sich sowohl auf das erfindungsgemäße Verfahren, auf die erfindungsgemäße Anordnung wie auch auf die erfindungsgemäße Gasturbinenanlage.

Die Erfindung und die beschriebenen Weiterbildungen können sowohl in Software als auch in Hardware, beispielsweise unter Verwendung einer speziellen elektrischen Schaltung, realisiert werden.

Ferner ist eine Realisierung der Erfindung oder einer beschriebenen Weiterbildung möglich durch ein computerlesbares Speichermedium, auf welchem ein Computerprogramm gespeichert ist, welches die Erfindung oder die Weiterbildung ausführt. Auch können die Erfindung und/oder jede beschriebene Weiterbildung durch ein Computerprogrammerzeugnis realisiert sein, welches ein Speichermedium aufweist, auf welchem ein Computerprogramm gespeichert ist, welches die Erfindung und/oder die Weiterbildung ausführt.

Der gegebene Zustand des in den Verdichter der Gasturbinenanlage einströmenden Mediums wird zumindest durch eine Temperatur und/oder Feuchte des Mediums beschrieben.

Sowohl die Temperatur als auch die Feuchte bzw. Feuchtigkeit des Mediums, also der Ansaugluft, sind mit einfachen bzw. kostengünstigen, vielfach erprobten und kostengünstigen Mitteln messbare Zustandsgrößen, wodurch sich eine besonders vorteilhafte Beschreibbarkeit des Zustands des in den Verdichter der Gasturbinenanlage einströmenden Mediums erreichen lässt.

Der Verdichtervorleitschaufelverstellungsgrenzwert ist in einer Abhängigkeit von einer Temperatur und/oder einer Feuchte des in den Verdichter der Gasturbinenanlage einströmenden Mediums ermittelbar.

Der Verdichtervorleitschaufelverstellungsgrenzwert kann ein Grenzwert gegen eine Eisbildung im Verdichter der Gasturbinenanlage sein. Die Feuchte (Feuchtigkeit) kann dabei ein relativer oder absoluter Wert sein.

Gegenüber der üblichen einmaligen Festlegung des Verdichtervorleitschaufelverstellungsgrenzwert auf Basis einer minimal anzunehmender Ansauglufttemperatur und einer maximaler anzunehmender Ansaugluftfeuchte (Worst Case) kann so auf besonders vorteilhafte Weise ein erweiterter Verstellbereich der Verdichtervorleitschaufelverstellung erzielt werden. Infolgedessen kann ein effizienterer und schadstoffemissionsärmerer Teillastbetrieb der Gasturbine, insbesondere bei einer hohen Ansaugluftemperatur und einer niedrigen Ansaugluftfeucht, erreicht werden.

Gemäß einer bevorzugten Weiterbildung der Erfindung bewirkt die zumindest eine Maßnahme eine Erhöhung einer Temperatur und/oder eine Reduzierung einer Feuchte des in den Verdichter der Gasturbinenanlage im Teillastbetrieb einströmenden Mediums.

Die Erhöhung der Temperatur des in den Verdichter der Gasturbinenanlage im Teillastbetrieb einströmenden Mediums (Ansaugluft) kann über eine Aktivierung einer Erwärmungseinrichtung und/oder über eine Deaktivierung einer Kühleinrichtung bewirkt werden. Dabei ist nicht ausgeschlossen, dass die Erhöhung der Temperatur eine Veränderung der Feuchte verursacht.

Die Reduzierung der Feuchte bzw. Feuchtigkeit des in den Verdichter der Gasturbinenanlage im Teillastbetrieb einströmenden Mediums (Ansaugluft) kann über eine Aktivierung einer Trocknungsseinrichtung und/oder über eine Deaktivierung einer Befeuchtungseinrichtung bewirkt werden. Dabei ist nicht ausgeschlossen, dass die Reduzierung der Feuchte bzw. Feuchtigkeit eine Veränderung der Temperatur verursacht.

Ein Vorteil der Erhöhung der Ansauglufttemperatur und Reduzierung der Ansaugluftfeuchte, insbesondere der relativen Feuchte der Ansaugluft, ist, dass die Vereisungsgefahr im Verdichter bei gleichbleibender Verdichtervorleitschaufelverstellung sinkt. D.h. vereinfacht ausgedrückt, dass bei gleicher Vereisungsgefahr eine stärkere Androsselung (Verdichtervorleitschaufelverstellung) vorgenommen und dadurch ein vorteilhafter Teillastbetrieb der Gasturbinenanlage erzielt werden kann.

In einer vorteilhaften Ausgestaltung der Erfindung wird die zumindest eine Maßnahme durch eine Aktivierung einer Anti-Icing-Einrichtung und/oder einer Ansaugluft-Heizeinrichtung und/oder einer Turbinenabgasrückführeinrichtung einer Ansaugluft-Trocknungseinrichtung und/oder eine Deaktivierung eines Evap-Coolers und/oder eines Compression-Inlet-Air-Chillers und/oder einer Wassereindüsungsvorrichtung bewirkt.

Die Anti-Icing-Einrichtung kann eine Einrichtung bzw. ein Nebenaggregat der Gasturbine sein, die bzw. das dazu vorbereitet ist, ein durch den Verdichter komprimiertes und damit erwärmtes Strömungsmedium, beispielsweise auf 300°C bis 400°C erwärmte Luft, in den einen Ansaugluftmassenstrom einzuspeisen.

Die Ansaugluft-Heizeinrichtung kann eine Einrichtung bzw. ein Nebenaggregat der Gasturbine sein, die bzw. das dazu vorbereitet ist, einen Ansaugluftmassenstrom um mehrere K, insbesondere 1 K bis 10 K, zu erwärmen.

Die Turbinenabgasrückführeinrichtung kann eine Einrichtung bzw. ein Nebenaggregat der Gasturbine sein, die bzw. das dazu vorbereitet ist, ein stark erhitztes Turbinenabgas, beispielsweise auf 500°C bis 600°C erwärmte Luft, in den einen Ansaugluftmassenstrom einzuspeisen.

Sog. Evap-Coolers (Verdunstungskühler), Compression-Inlet-Air-Chillers (Verdichtereinlassluftkühler) und Wassereindüsungsvorrichtungen (Fogging, Overspay, Wet-Compression) sind aus dem Stand der Technik bekannte Einrichtungen zur Ansaugluftkühlung und/oder Ansaugluftbefeuchtung, die üblicherweise zur Erhöhung einer maximal erzielbaren Gasturbinenleistung eingesetzt werden. Sofern diese im Teillastbetrieb aktiviert sind, lässt sich durch deren Deaktivierung eine besonders kostengünstige relative Ansauglufttemperaturerhöhung und/oder -trocknung erreichen.

In einfacher Weise kann durch die Aktivierung und/oder Deaktivierung - neben der bereits beschriebenen vorteilhaften erweiterten Androsselung - so auf einfache Weise auch unmittelbar der Ansaugluftmassenstrom verringert werden, wodurch die Gasturbinen-Leistung im Teillastbetrieb vorteilhafterweise weiter verringert wird. Vereinfacht ausgedrückt kann ein besonders vorteilhafter Teillastbetrieb in Kombination von erweiterter Androsselung und unmittelbar dichtebedingt verringertem Ansaugluftmassenstrom erzielt werden.

In einer weiteren Ausführungsvariante wird vorgeschlagen, dass der Wert der eingeleiteten Verdichtervorleitschaufelverstellung ein inkrementeller Wert oder ein absoluter Wert ist.

Zweckmäßigerweise ist der Wert der eingeleiteten Verdichtervorleitschaufelverstellung ein Winkel.

In bevorzugter Weise ist der Verdichtervorleitschaufelverstellungsgrenzwert ein oberer Grenzwert und die vorgegebene Bedingung ein Erreichen oder Überschreiten des oberen Grenzwertes oder ein unterer Grenzwert und die vorgegebene Bedingung ein Erreichen oder Unterschreiten des unteren Grenzwertes.

Zweckmäßigerweise wird das Verfahren jeweils für eine Mehrzahl aufeinanderfolgender Zeitpunkte, d.h. für einen Zeitverlauf, durchgeführt. Typischerweise wird das Verfahren also für einen Zeitverlauf dergestalt durchgeführt, dass zu einer gewissen Zeit t1 eine Verdichtervorleitschaufelverstellung eingeleitet wird. Zweckmäßigerweise wird der Wert der Verdichtervorleitschaufelverstellung - also der sich im Zeitverlauf nach einer Einleitung einstellende Wert - mit dem Verdichtervorleitschaufelverstellungsgrenzwert zeitkontinuierlich bzw. in Abstand gewisser Zeitinkremente verglichen. Insbesondere ist der Verdichtervorleitschaufelverstellungsgrenzwert zu mehreren aufeinanderfolgenden Zeitpunkten ermittelbar. Vorteilhafterweise erfolgt eine Überprüfung der vorgegebenen Bedingung in hinreichend geringen Zeitabständen, beispielsweise im Abstand von 0.1 s bis 10 s. So kann auf einfache Weise eine hohe Prozesssicherheit des Teillastbetriebs der Gasturbinenanlage gegen Vereisung im Verdichter erreicht werden.

Es wird außerdem vorgeschlagen, dass das Verfahren zu einer Steuerung einer Temperatur und/oder einer Feuchte des in den Verdichter der Gasturbinenanlage im Teillastbetrieb einströmenden Mediums eingesetzt wird. Auf diese Weise können die für die zulässige Androsselung maßgeblichen Zustandsgrößen gesteuert werden, wodurch sich eine einfache, insbesondere gegen eine Verdichtervereisung abgesicherte, Steuerbarkeit des Teillastbetriebs der Gasturbine erreichen lässt.

In einer vorteilhaften Erfindungsvariante wird das Verfahren zu einer Regelung eines Betriebs einer Gasturbinenanlage im Teillastbetrieb eingesetzt, wobei eine Regelgröße die Temperatur und/oder eine Regelgröße die Feuchte ist, eine Stellgröße der Wert der eingeleiteten Verdichtervorleitschaufelverstellung ist und ein Steuersignal eine Anti-Icing-Einrichtung ansteuert und/oder ein Steuersignal eine Ansaugluft-Heizeinrichtung ansteuert und/oder in Steuersignal einen Evap-Cooler ansteuert.

Vorteilhafterweise sind die Steuereinheit der erfindungsgemäßen Anordnung zur Ansteuerung einer Anti-Icing-Einrichtung und/oder einer Ansaugluft-Heizeinrichtung und/oder eines Evap-Coolers vorbereitet.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammenfasst werden. Insbesondere sind diese Merkmale jeweils einzeln und in beliebiger geeigneter Kombination mit dem erfindungsgemäßen Verfahren, der erfindungsgemäßen Anordnung und der erfindungsgemäßen Gasturbinenlage gemäß den unabhängigen Ansprüchen kombinierbar.

Die oben beschriebenen Eigenschaften, Merkmale und Vorteile dieser Erfindung, sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Die Ausführungsbeispiele dienen der Erläuterung der Erfindung und beschränken die Erfindung nicht auf die darin angegebene Kombination von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und/oder mit einem beliebigen der Ansprüche kombiniert werden.

Es zeigen:
- FIG 1: einen Schnitt durch eine erfindungsgemäße Gasturbinenanlage mit einer Anordnung zur Steuerung der Gasturbinenanlage im Teillastbetrieb,
- FIG 2: eine schematische Darstellung eines Regelkreises zur Regelung des Betriebs des Gasturbinenanlage im Teillastbetrieb,
- FIG 3: ein Diagramm mit Zustandsbereichen und Grenzkurven der Gasturbinenanlage in Abhängigkeit von dem Ansaugluftfeuchte und der Ansauglufttemperatur und
- FIG 4: ein Diagramm mit Leistungskurven der Gasturbinenanlage in Abhängigkeit von der Verdichtervorleitschaufelverstellung und einer Abgastemperatur.

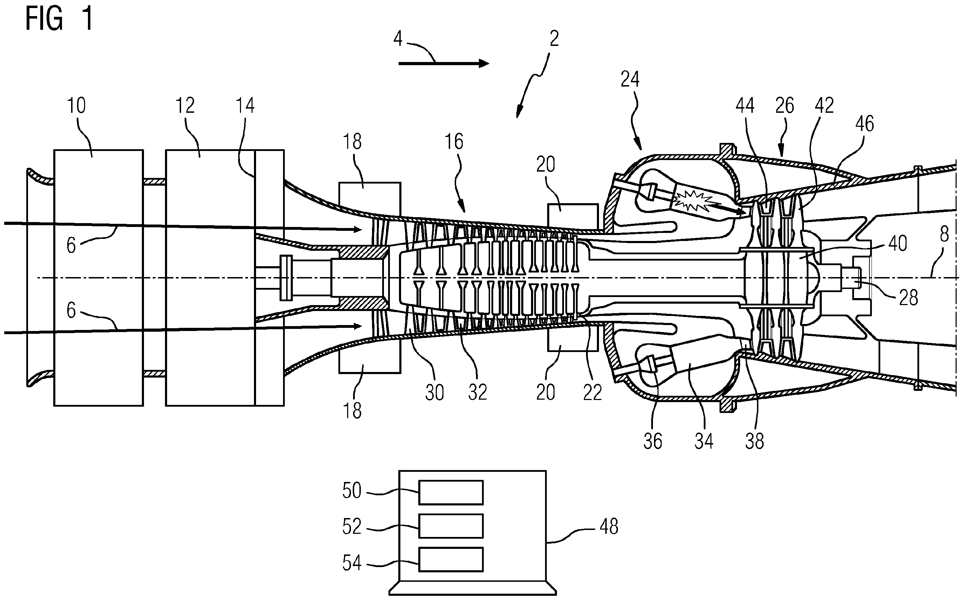

FIG 1 zeigt in eine schematische Darstellung einer Gasturbinenanlage 2. Im folgenden Text werden die Begriffe Gasturbinenanlage und Gasturbine äquivalent verwendet. Die Gasturbine 2 weist unter anderem in Hauptströmungsrichtung 4 eines Strömungsmediums 6, wie beispielsweise Luft, bzw. in Längsrichtung einer Rotationsachse 8 einen Evap-Cooler 10 (Verdunstungskühler), eine Ansaugluft-Heizeinrichtung 12, einen Verdichtereintritt 14, einen Verdichter 16, eine Verdichtervorleitschaufelverstelleinrichtung 18, eine Anti-Icing-Einrichtung 20, einen Verdichteraustritt 22, eine Brennereinheit 24 und eine Turbineneinheit 26 auf.

Die Elemente 10, 12, 18 und 20 sind im gegebenen Ausführungsbeispiel zweiteilig dargestellt bzw. rotationssymmetrisch zur Rotationsachse 8 ausgeführt, was selbstverständlich nicht zwingend der Fall sein muss.

Die Gasturbine weist zudem eine Antriebwelle 28 auf, die um die Rotationsachse 8 rotierbar ist und sich longitudinal entlang der Gasturbine 2 erstreckt. Die Antriebswelle 28 verbindet die Turbineneinheit 26 antriebs- bzw. drehfest mit dem Verdichter 16.

Der Verdichter 14 weist eine Abfolge von axial angeordneten Verdichterleitschaufelstufen 30 und Verdichterschaufelstufen 32 auf. Zumindest eine Stufe bzw. eine Reihe der Verdichterleitschaufeln ist zur Verstellung, also zur Verdrehung gegen die Hauptströmungsrichtung 4 des Strömungsmediums 6, durch die Verdichtervorleitschaufelverstelleinrichtung 18 vorbereitet.

Während eines Betriebs der Gasturbine 2 tritt das Strömungsmedium 6 nach Durchströmen des Evap-Coolers 10 und der Ansaugluft-Heizeinrichtung 12 durch den Verdichtereintritt 14 in den Verdichter 16 ein. Das Strömungsmedium 6 wird im Verdichter 16 komprimiert und dadurch auf 300°C bis 500°C erhitzt. Das komprimierte Strömungsmedium 6 wird über den Verdichteraustritt 22 der Brennereinheit 24, die beispielsweise in Form eine Ringbrennereinheit ausgeführt sein kann, zugeführt. Die Brennereinheit 24 weist eine oder mehreren Brennkammern 34 mit jeweils einem Brenner 36 auf.

Das aus dem Verdichter 16 kommende, komprimierte Strömungsmedium 6 wird zumindest anteilig in die Brennereinheit 24 bzw. die Brennkammer 34 geleitet und dort mit einem gasförmigen oder flüssigen Brennstoff gemischt. Das derart in der Brennereinheit 24 gebildete zundfähige Gemisch wird dann gezündet bzw. verbrannt und das Brenngas bzw. das Arbeitsgas der Verbrennung wird über einen Übergangskanal 38 zu der Turbineneinheit 26 der Gasturbine 2 geleitet.

Die Anti-Icing-Einrichtung, die am stromabwärtigen Ende des Verdichters 16 in baulicher Nähe zum Verdichteraustritt 22 angeordnet ist, ist dazu vorbereitet, einen Teil des komprimierten, erhitzten Strömungsmediums 6 an den Verdichtereintritt 14 zu leiten.

Die Turbineneinheit 26 weist mehrere mit der Antriebswelle 28 verbundene Turbinenräder 40 mit Turbinenschaufeln 42 auf. Zudem sind axial zwischen den Turbinenrädern 40 Leitschaufeln 44 angeordnet. Die Leitschaufeln 44 der Turbineneinheit 26 sind wiederum mit einem Stator 46 verbunden.

Das Verbrennungsgas aus der Brennkammer bzw. den Brennkammern 34 tritt in die Turbineneinheit 26 ein und treibt die Turbinenschaufeln 42 derart an, dass die Antriebswelle 28 rotatorisch angetrieben wird und ein Drehmoment um die Rotationsachse 8 der Gasturbine 2 generiert wird. Die Leitschaufeln 44 dienen dazu, das Verbrennungsgas bzw. das Arbeitsgas auf die Turbinenschaufeln 42 lenken, also der Strömungsführung.

Die Verdichterschaufelstufen 32 werden durch die Antriebswelle 28, also durch das in der Turbineneinheit 26 generierte Drehmoment, angetrieben und in eine Drehung um die Rotationsachse 8 versetzt, wodurch das komprimierte Strömungsmedium 6 von der Gasturbine 2 selbst generiert wird sobald diese sich in einem entsprechenden Betriebszustand befindet.

Die Gasturbine 2 weist des Weiteren eine Steueranordnung 48 auf, welche zu einer besseren Darstellbarkeit in FIG 1 außerhalb bzw. baulich getrennt von der Gasturbine 2 dargestellt ist. Die Steueranordnung 48 weist eine Stelleinrichtung 50, eine Ermittlungseinrichtung 52 und eine Steuereinheit 54 auf. Die Steueranordnung 48 dient unter anderem zu einer Steuerung eines Betriebes der Gasturbine 2 in einem Teillastbetrieb.

Die Stelleinrichtung 50 ist dazu vorbereitet, die Verdichtervorleitschaufelverstelleinrichtung 18 anzusteuern um eine Verstellung der Verdichterleitschaufelstufen 30 gegen die Hauptströmungsrichtung 4 einzuleiten.

Die Ermittlungseinrichtung 52 ist dazu vorbereitet, einen Verdichtervorleitschaufelverstellungsgrenzwert in einer Abhängigkeit von dem Zustand des Strömungsmediums 6, insbesondere von dessen Temperatur und Feuchte, zu ermitteln. Außerdem dient die Ermittlungseinrichtung 52 dazu einen Wert der aktuellen, sich im Betrieb einstellenden Verdichtervorleitschaufelverstellung mit dem Verdichtervorleitschaufelverstellungsgrenzwert zu vergleichen.

Die Steuereinheit 54 dient zur Ansteuerung des Evap-Coolers 10, der Ansaugluft-Heizeinrichtung 12 und der Anti-Icing-Einrichtung 20, wenn der Wert der eingeleiteten Verdichtervorleitschaufelverstellung bezüglich des Verdichtervorleitschaufelverstellungsgrenzwertes eine vorgegebene Bedingung erfüllt.

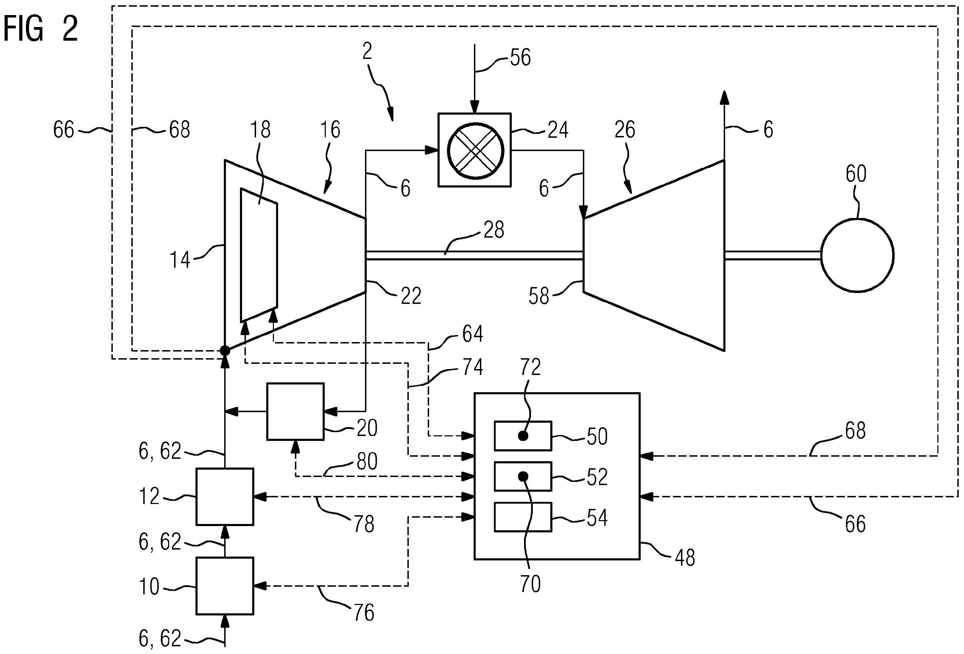

Eine schematische Darstellung eines Regelkreises zur Regelung des Betriebs der Gasturbinenanlage 2 im Teillastbetrieb ist in FIG 2 dargestellt und nachfolgend beschrieben. Während eines Betriebs der Gasturbinenanlage 2 strömt das Strömungsmedium 6 aus einer nicht näher beschriebenen Umgebung nach Durchströmung des Evap-Coolers 10 und der Ansaugluft-Heizeinrichtung 12 in den Verdichtereintritt 14 des Verdichters 16 der Gasturbinenanlage 2. Das Strömungsmedium 6 wird im Verdichter 16 komprimiert, tritt über den Verdichteraustritt 22 aus dem Verdichter 16 aus und gelangt nachfolgend in die Brennereinheit 24.

In der Brennereinheit 24 wird aus dem komprimierten Strömungsmedium 6 unter Zuführung eines Brennstoffmassenstromes 56, beispielsweise eines Massenstromes eines Gases, ein zündfähiges Gemisch hergestellt und zur Zündung gebracht, wobei die Zündung insbesondere kontinuierlich abläuft.

Das gezündete Strömungsmedium 6 verlässt die Brennereinheit 24 in Hauptströmungsrichtung 4 (siehe FIG 1) und tritt über den Turbineneintritt 58 in die Turbineneinheit 26 der Gasturbinenanlage 2 ein und versetzt die Turbinenräder 40 (siehe FIG 1) in Rotation, derart, dass ein Drehmoment auf die Antriebswelle 28 übertragen wird.

Eine aus dem derart generierten Drehmoment und der Drehzahl der Antriebswelle 28 resultierende Leistung der Gasturbinenanlage 2 wird zu einem Teil an den antriebswellenseitig montierten Verdichter 16 zur Verrichtung von Kompressionsarbeit übertragen. Ein anderer Teil der Leistung der Gasturbinenanlage 2 wird als Nutzleistung an einen Generator 60 übertragen und in diesem in elektrische Energie umgesetzt.

Ausgehend von einem Nennlastbetrieb der Gasturbinenanlage 2 erfolgt zum Betreiben der Gasturbinenanlage 2 bei einer Teillast, beispielsweise bei 80% der Nennlast, eine Androsselung, d.h. der Ansaugluftmassenstrom 62 wird durch eine Verstellung der Verdichtervorleitschaufeln bzw. einer oder mehrerer Verdichterleitschaufelstufen 30 (siehe FIG 1) reduziert. Zur Verstellung der Verdichterleitschaufelstufen 30 erfolgt eine Ansteuerung der Verdichtervorleitschaufelverstelleinrichtung 18 mit einem Steuersignal 64 ausgehend von der Stelleinrichtung 50, die im hier gezeigten Ausführungsbeispiel ein Teil der Steueranordnung 48 ist.

Die Steueranordnung 48 erfasst bzw. ermittelt einen Temperaturwert (die "Temperatur") und einen Feuchtewert bzw. einen Feuchtigkeitswert (die "Feuchte", "Feuchtigkeit") des am Verdichtereintritt 14 einströmenden Strömungsmediums 6, d.h. eine Ansauglufttemperatur 66 und eine Ansaugluftfeuchte 68. Eine Ermittlung der Ansaugluftfeuchte 68 und der Ansauglufttemperatur 66 kann beispielsweise über hierfür geeignete Sensoren oder über anderweitige Messeinrichtungen erfolgen, wobei die Sensoren oder die Messeinrichtungen auch integraler Bestandteil der Steueranordnung 48 sein können.

In Abhängigkeit der Ansauglufttemperatur 66 und Ansaugluftfeuchte 68 ermittelt die Ermittlungseinrichtung 52 einen Verdichtervorleitschaufelverstellungsgrenzwert 70. Der Verdichtervorleitschaufelverstellungsgrenzwert 70 ist insbesondere ein Grenzwert der Verstellung bei dessen Erreichen bzw. Unter- oder Überschreiten eine Vereisung des in den Verdichtereintritt 14 einströmenden Ansaugluftmassenstromes 66 zu erwarten ist. Üblicherweise ist die Verreisungsgefahr umso höher, je niedriger die Ansauglufttemperatur 66 und je höher die Ansaugluftfeuchte 68 ist.

Zudem vergleicht die Ermittlungseinrichtung 52 den Verdichtervorleitschaufelverstellungsgrenzwert 70 mit dem Wert der eingeleiteten Verdichtervorleitschaufelverstellung, dem Verdichtervorleitschaufelverstellungs-Istwert 72, der von der Verdichtervorleitschaufelverstelleinrichtung 18 als Signal 74 an die Stelleinrichtung 50 geleitet wird. Diese Zuleitung an die Stelleinrichtung 50 ist allerdings nicht zwingend notwendig, da der Wert 72 auch als Stellwert in der Stelleinrichtung 50 hinterlegt bzw. abrufbar sein kann.

Infolge dieses Vergleichs ergeben sich die folgenden wesentlichen Steuerungs- bzw. Regelungszustände:
Erreicht der Verdichtervorleitschaufelverstellungs-Istwert 72 den Verdichtervorleitschaufelverstellungsgrenzwert 70 nicht, d.h. ist der zulässige Bereich für die Verstellung eingehalten, kann - sofern eine weitere Verringerung der Teillast erzielt werden soll - eine weitere Androsselung, also Verdichtervorleitschaufelverstellung über die Stelleinrichtung 50, das Steuersignal 64 und die Verdichtervorleitschaufelverstelleinrichtung 18 vorgenommen werden.

Erreicht bzw. Unterschreitet der Verdichtervorleitschaufelverstellungs-Istwert 72 den Verdichtervorleitschaufelverstellungsgrenzwert 70, d.h. ist der zulässige Bereich für die Verstellung nicht eingehalten und es kann zu einer Vereisung im Verdichter 16 kommen, leitet die Steuereinheit 54 zumindest eine Maßnahme zur Veränderung der Ansauglufttemperatur 66 bzw. der Ansaugluftfeuchte 68 ein:
Eine Maßnahme ist eine Ansteuerung des Evap-Coolers 10 über das Steuersignal 76, zu dessen Deaktivierung. Diese Maßnahme setzt voraus, dass der Evap-Cooler 10 zum Zeitpunkt der Ansteuerung aktiviert ist, d.h. im Betrieb zur Befeuchtung bzw. Kühlung des Ansaugluftmassenstromes 62. Bei üblichen Gasturbinenanlagen 2 ist dies bei einem Nennlastbetrieb üblich. Durch die Deaktivierung des Evap-Coolers 10 wird eine Erhöhung der Ansauglufttemperatur 66 und/oder eine Verringerung der Ansaugluftfeuchte 68 erreicht. Dies führt wiederum zu einer positiven Beeinflussung des Verdichtervorleitschaufelverstellungsgrenzwerts 70, da die Vereisungsgefahr mit steigender Ansaugluftemperatur 66 und fallender Ansaugluftfeuchte 68 abnimmt.

Eine weitere Maßnahme ist eine Ansteuerung der Ansaugluft-Heizeinrichtung 12 über das Steuersignal 78, zu deren Aktivierung bzw. Steuerung. Die aktivierte bzw. angesteuerte Ansaugluft-Heizeinrichtung 12 erwärmt den Ansaugluftmassenstrom 62, erhöht also die Ansauglufttemperatur 66, was insbesondere auch zu einer Verringerung der Ansaugluftfeuchte 68 führen kann. Dies führt wiederum zu einer positiven Beeinflussung des Verdichtervorleitschaufelverstellungsgrenzwerts 70, da die Vereisungsgefahr mit steigender Ansaugluftemperatur 66 und fallender Ansaugluftfeuchte 68 abnimmt.

Eine weitere Maßnahme ist eine Ansteuerung der Anti-Icing-Einrichtung 20 über das Steuersignal 80, zu deren Aktivierung bzw. Steuerung. Die aktivierte bzw. angesteuerte Anti-Icing-Einrichtung 20 führt einen Heißluftmassenstrom 82 am Verdichteraustritt 22 ab und speist diesen in den Ansaugluftmassenstrom 62 ein. Durch die Einspeisung des in der Regel zwischen 300° bis 500°C heißen Heißluftmassenstromes 82 erhöht sich die Ansauglufttemperatur 66, was insbesondere auch zu einer Verringerung der Ansaugluftfeuchte 68 führen kann. Dies führt wiederum zu einer positiven Beeinflussung des Verdichtervorleitschaufelverstellungsgrenzwerts 70, da die Vereisungsgefahr mit steigender Ansaugluftemperatur 66 und fallender Ansaugluftfeuchte 68 abnimmt.

Die beschriebenen Maßnahmen können einzeln oder in Kombination, gleichzeitig oder zeitversetzt bewirkt werden.

Die beschriebenen Maßnahmen bewirken eine Verringerung der Vereisungsgefahr im Verdichter 16, also eine Verringerung des Verdichtervorleitschaufelverstellungsgrenzwerts 70, der sich üblicherweise auf einen Anstellwinkel der Verdichtervorleitschaufel zur Hauptströmungsrichtung 4 bezieht. Infolgedessen kann der Verdichtervorleitschaufelverstellungs-Istwert 72 durch eine Ansteuerung der Verdichtervorleitschaufelverstelleinrichtung 18 über das Signal 64 ausgehend von der Steueranordnung 48 reduziert werden, ohne dass mit einem Vereisen zu rechnen ist. Durch die nunmehr verstärkte Androsselung des Strömungsmediums 6 im Verdichtereintritt 14 wird eine Reduzierung des Ansaugluftmassenstromes 62 erreicht.

Durch die so erreichte nochmalige Reduzierung des Ansaugluftmassenstromes 62 wird ein besonders brennstoffeffizienter und schadstoffemissionsarmer Teillastbetrieb der Gasturbinenanlage 2, insbesondere bei niedrigen Umgebungslufttemperaturen und hohen Umgebungsluftfeuchten, erreicht.

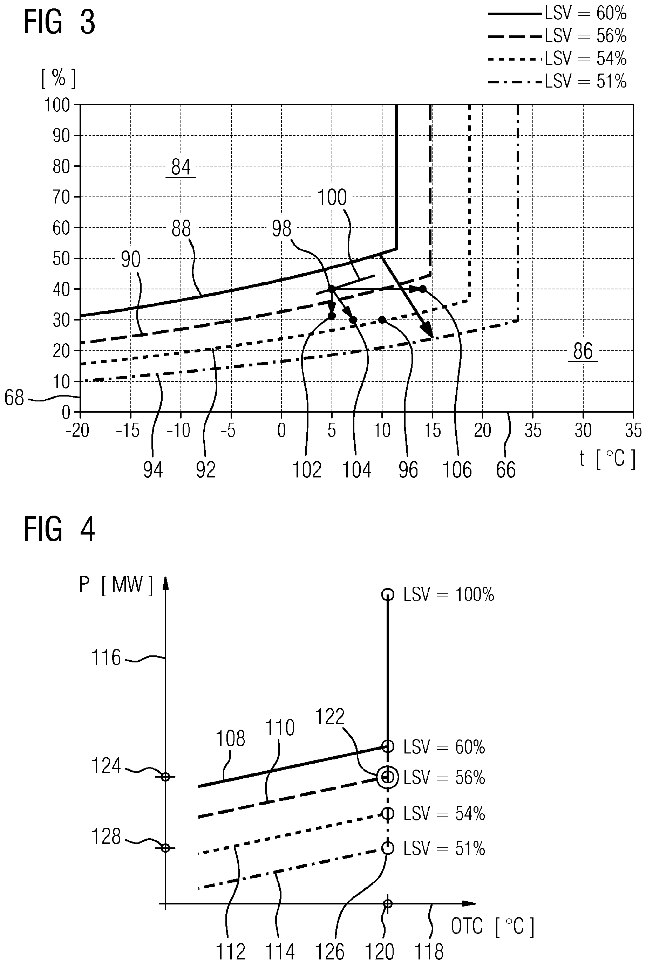

FIG 3 zeigt ein Diagramm mit regelungstechnisch relevanten Zustandsbereichen (84, 86) und Grenzkurven (88, 90, 92, 94) der Gasturbinenanlage in Abhängigkeit von dem Ansaugluftfeuchte 68 (Ordinate [%]) und der Ansauglufttemperatur 66 (Abszisse [°C]) gemäß dem Ausführungsbeispiel aus FIG 2. Anhand des Diagramms in FIG 3 kann verdeutlicht werden, ob bei einer bestimmten Androsselung - d.h. einer bestimmten Verdichtervorleitschaufelverstellung - in Abhängigkeit von der gegebenen Kombination von Ansaugluftfeuchte 68 und Ansauglufttemperatur 66 eine Vereisung des Verdichtereintritts 14 (siehe FIG 1, 2) eintreten kann.

Die Grenzkurven 88, 90, 92 und 94 beziehen sich auf eine Verdichtervorleitschaufelverstellung von 60%, 56%, 54% und 51%. Im Zustandsbereich 84, der oberhalb der Grenzkurven 88 bzw. 90 bzw. 92 bzw. 94 zum liegen kommt, kann es zu einer Vereisung des Verdichtereintritts kommen. Im Zustandsbereich 86, der unterhalb bzw. rechts der Grenzkurven 88 bzw. 90 bzw. 92 bzw. 94 zum liegen kommt, ist keine Vereisung möglich.

Beispielsweise ausgehend von einem Zustand 96 auf der Grenzkurve 92, d.h. bei einer Verdichtervorleitschaufelverstellung von 54%, einer Ansauglufttemperatur 66 von 10°C und einer Ansaugluftfeuchte 68 von 30%, kann es direkt oberhalb bzw. links des Zustands 96 zum Vereisen kommen, direkt unterhalb bzw. rechts des Zustands 92 nicht zum Vereisen kommen.

In einem Teillastbetrieb der Gasturbine 2 (siehe FIG 1, 2) bei einer Ansauglufttemperatur 66 von 5°C und einer Ansaugluftfeuchte 68 von 40 %, also im Zustand 98, und einer Verdichtervorleitschaufelverstellung von 60 % (Grenzkurve 88) liegt keine Vereisungsgefahr vor. Der maßgebliche Verdichtervorleitschaufelverstellungsgrenzwert 70 in diesem Zustand 98 liegt bei etwa 58% und wird durch die Grenzkurve 100 verdeutlicht.

Zur Verringerung der Leistung der Gasturbine 2 (siehe FIG 1, 2) im Teillastbetrieb im Zustand 98 wird der Ansaugluftmassenstrom 62 über eine Ansteuerung einer Verdichtervorleitschaufelverstellung von 56% reduziert. Der Wert der Verdichtervorleitschaufelverstellung von 56% unterschreitet den im Zustand 98 maßgeblichen Verdichtervorleitschaufelverstellungsgrenzwert 70 von etwa 58% bzw. die Grenzkurve 100 und es kann deshalb zu einer Vereisung des Verdichtereintritts 14 kommen.

Ausgehend vom Zustand 98 erfolgt die Einleitung zumindest einer Maßnahme zur Veränderung der Ansauglufttemperatur 66 und/oder der Ansaugluftfeuchte 68, beispielsweise durch eine Ansteuerung der Anti-Icing-Einrichtung 20 und/oder der Ansaugluft-Heizeinrichtung 12 und/oder des Evap-Coolers 10 (siehe FIG 1, 2). Infolgedessen wird durch eine Erwärmung und Trocknung des Ansaugluftmassenstromes 62 ein Zustand 104 bei einer Ansauglufttemperatur 66 von 7°C und 30% Ansaugluftfeuchte 68 erreicht. Der Zustand 104 liegt unterhalb der Grenzkurve 90, folglich kann in diesem Teillastbetrieb der Gasturbinenanlage 2 keine Vereisung des Verdichtereintritts 14 auftreten.

In dem so angesteuerten Zustand 104 ergibt sich eine Verdichtervorleitschaufelverstellungsgrenzwert 70 von etwa 55%. D.h. es kann eine weitere Androsselung, nämlich von 56% auf 55% Verdichtervorleitschaufelverstellung, zur Erreichung eines Teillastbetriebs der Gasturbinenanlage 2 bei nochmals verringertem Ansaugluftmassenstrom 62 und dementsprechend verringerter Gasturbinen-Leistung vorgenommen werden.

Alternativ kann auch irgendein anderer Zustand unterhalb der Grenzkurve 90 angesteuert werden, beispielsweise die Zustände 102 oder 106.

FIG 4 zeigt ein Diagramm mit regelungstechnisch relevanten Leistungskurven (108-114) (Gasturbinen-Leistung 116 Ordinate [MW]) der Gasturbinenanlage in Abhängigkeit von der Verdichtervorleitschaufelverstellung und einer Abgastemperatur 118 der Gasturbinenanlage 2 (Abszisse [°C]) gemäß dem Ausführungsbeispiel aus FIG 2. Anhand des Diagramms in FIG 4 kann verdeutlicht werden, inwieweit der Verdichtervorleitschaufelverstellungs-Istwert 72 (siehe FIG 2, 3) die Gasturbinen-Leistung 116, insbesondere bei konstanter Abgastemperatur 118 im Teillastbereich, beeinflusst.

Bei einem Abgastemperaturwert 120 und einem Verdichtervorleitschaufelverstellungswert 122 von 56% stellt sich ein Leistungswert 124 ein. Bei der identischen, also konstant eingehaltenen, Abgastemperaturwert 120 und einem verringerten Verdichtervorleitschaufelverstellungswert 126 von 51% stellt sich ein verringerter Leistungswert 128 ein.

## Patentansprüche

1. Verfahren zum Betreiben einer Gasturbinenanlage (2) in einem Teillastbetrieb,
**dadurch gekennzeichnet, dass**
- bei einem gegebenen Betriebszustand eines in einen Verdichter (16) der Gasturbinenanlage (2) einströmenden Strömungsmediums (6) eine Verdichtervorleitschaufelverstellung für den Teillastbetrieb eingeleitet wird,
- zumindest eine Temperatur (66) und/oder Feuchte (68) des einströmenden Strömungsmediums (6) bei dem Betriebszustand ermittelt wird,
- in Abhängigkeit der ermittelten Temperatur (66) und/oder Feuchte (68) des einströmenden Strömungsmediums (6) ein Verdichtervorleitschaufelverstellungsgrenzwert (70) im Betrieb ermittelt wird,
- ein Wert (72) der eingeleiteten Verdichtervorleitschaufelverstellung mit dem im Betrieb ermittelten Verdichtervorleitschaufelverstellungsgrenzwert (70) verglichen wird und,
- wenn der Wert (72) der eingeleiteten Verdichtervorleitschaufelverstellung bezüglich des im Betrieb ermittelten Verdichtervorleitschaufelverstellungsgrenzwertes (70) eine vorgegebene Bedingung erfüllt,
- zumindest eine Maßnahme zur Veränderung des Zustands (96, 98, 102-106) des in den Verdichter (16) der Gasturbinenanlage (2) im Teillastbetrieb einströmenden Strömungsmediums (6) eingeleitet wird.

2. Verfahren nach Anspruch 1,
**dadurch gekennzeichnet, dass** die zumindest eine Maßnahme
- eine Erhöhung einer Temperatur (66) und/oder
- eine Reduzierung einer Feuchte (68) des in den Verdichter (16) der Gasturbinenanlage (2) im Teillastbetrieb einströmenden Strömungsmediums (6) bewirkt.

3. Verfahren nach einem der vorherigen Ansprüche,
**dadurch gekennzeichnet, dass** die zumindest eine Maßnahme durch
- eine Aktivierung (78, 80)
- einer Anti-Icing-Einrichtung (20) und/oder
- einer Ansaugluft-Heizeinrichtung (12) und/oder
- einer Turbinenabgasrückführeinrichtung und/oder
- einer Ansaugluft-Trocknungseinrichtung
und/oder
- eine Deaktivierung (76)
- eines Evap-Coolers (10) und/oder
- eines Compression-Inlet-Air-Chillers und/oder
- einer Wassereindüsungsvorrichtung
bewirkt wird.

4. Verfahren nach einem der vorherigen Ansprüche,
**dadurch gekennzeichnet, dass** der Wert (72) der eingeleiteten Verdichtervorleitschaufelverstellung ein inkrementeller Wert oder ein absoluter Wert ist.

5. Verfahren nach einem der vorherigen Ansprüche,
**dadurch gekennzeichnet, dass** der Wert (72) der eingeleiteten Verdichtervorleitschaufelverstellung ein Winkel ist.

6. Verfahren nach einem der vorherigen Ansprüche,
**dadurch gekennzeichnet, dass** der Verdichtervorleitschaufelverstellungsgrenzwert (70)
- ein oberer Grenzwert (88-94) und die vorgegebene Bedingung ein Erreichen oder Überschreiten des oberen Grenzwertes (88-94)
oder
- ein unterer Grenzwert (88-94) und die vorgegebene Bedingung ein Erreichen oder Unterschreiten des unteren Grenzwertes (88-94)
ist.

7. Verfahren nach einem der vorherigen Ansprüche, durchgeführt jeweils für eine Mehrzahl aufeinanderfolgender Zeitpunkte.

8. Verfahren nach einem der vorhergehenden Ansprüche, eingesetzt zu einer Steuerung einer Temperatur (66) und/oder einer Feuchte (68) des in den Verdichter (16) der Gasturbinenanlage (2) im Teillastbetrieb einströmenden Strömungsmediums (6).

9. Verfahren nach einem der vorhergehenden Ansprüche, eingesetzt zu einer Regelung eines Betriebs einer Gasturbinenanlage im Teillastbetrieb, bei dem
- eine Regelgröße die Temperatur (66) und/oder
- eine Regelgröße die Feuchte (68) ist,
- eine Stellgröße der Wert (72) der eingeleiteten Verdichtervorleitschaufelverstellung ist und
- ein Steuersignal (80) eine Anti-Icing-Einrichtung (20) ansteuert und/oder
- ein Steuersignal (78) eine Ansaugluft-Heizeinrichtung (12) ansteuert und/oder
- ein Steuersignal (76) einen Evap-Cooler (10) ansteuert.

10. Anordnung (48) zur Steuerung einer Gasturbinenanlage (2) in einem Teillastbetrieb,
**gekennzeichnet durch**
- eine Stelleinrichtung (50) eingerichtet derart, dass
- bei einem gegebenen Betriebszustand eines in einen Verdichter (16) der Gasturbinenanlage (2) einströmenden Strömungsmediums (2) eine Verdichtervorleitschaufelverstellung einleitbar ist
und
- eine Steueranordnung (48) eingerichtet derart, dass
- zumindest eine Temperatur (66) und/oder Feuchte (68) des einströmenden Strömungsmediums (6) bei dem Betriebszustand ermittelbar ist,
und
- eine Ermittlungseinrichtung (52) eingerichtet derart, dass
- in Abhängigkeit der ermittelten Temperatur (66) und/oder Feuchte (68) des einströmenden Strömungsmediums (6) ein Verdichtervorleitschaufelverstellungsgrenzwert (70) ermittelbar ist und
- ein Wert (72) der einleitbaren Verdichtervorleitschaufelverstellung mit dem im Betrieb ermittelten Verdichtervorleitschaufelverstellungsgrenzwert (70) vergleichbar ist
und
- eine Steuereinheit (54) eingerichtet derart, dass
- zumindest eine Maßnahme zur Veränderung des Zustands (96, 98, 102-106) des in den Verdichter (16) der Gasturbinenanlage (2) im Teillastbetrieb einströmenden Strömungsmediums (6) einleitbar ist, wenn der Wert (72) der eingeleiteten Verdichtervorleitschaufelverstellung bezüglich des im Betrieb ermittelten Verdichtervorleitschaufelverstellungsgrenzwertes (70) eine vorgegebene Bedingung erfüllt.

11. Anordnung (48) nach Anspruch 10,
**dadurch gekennzeichnet dass**, die Steuereinheit (54) zur Ansteuerung einer Anti-Icing-Einrichtung (20) und/oder einer Ansaugluft-Heizeinrichtung (12) und/oder eines Evap-Coolers (10) vorbereitet ist.

12. Gasturbinenanlage (2) aufweisend eine Verdichtervorleitschaufelverstelleinrichtung (18),
**gekennzeichnet durch** eine Anti-Icing-Einrichtung (20) und/oder eine Ansaugluft-Heizeinrichtung (12) und eine Anordnung (48) nach Anspruch 10 oder 11.

## Claims

1. Method of operating a gas turbine system (2) in part load operation,
**characterized in that**
- with a given operating state of a flow medium (6) flowing into a compressor (16) of the gas turbine system (2), a compressor pre-guide blade adjustment for part load operation is initiated,
- at least one temperature (66) and/or humidity (68) of the flow medium (6) flowing in is determined in the operating state,
- depending on the determined temperature (66) and/or humidity (68) of the flow medium (6) flowing in, a compressor pre-guide blade adjustment limit value (70) is determined in operation,
- a value (72) of the initiated compressor pre-guide blade adjustment is compared with the compressor pre-guide blade adjustment limit value (70) which is determined in operation, and
- if the value (72) of the initiated compressor pre-guide blade adjustment fulfils a predefined condition with regard to the compressor pre-guide blade adjustment limit value (70) which is determined in operation,
- at least one measure is initiated for changing the state (96, 98, 102-106) of the flow medium (6) flowing into the compressor (16) of the gas turbine system (2) in part load operation.

2. Method according to Claim 1,
**characterized in that** the at least one measure brings about
- an increase in a temperature (66) and/or
- a reduction in a humidity (68)
of the flow medium (6) flowing into the compressor (16) of the gas turbine system (2) in part load operation.

3. Method according to any one of the preceding claims, **characterized in that** the at least one measure is initiated through
- an activation (78, 80)
- of an anti-icing device (20) and/or
- of an intake air heating device (12) and/or
- of a turbine exhaust gas return device and/or
- of an intake air drying device
and/or
- a deactivation (76)
- of an evaporative cooler (10) and/or
- of a compression inlet air chiller and/or
- of a water injection device.

4. Method according to any one of the preceding claims, **characterized in that** the value (72) of the initiated compressor pre-guide blade adjustment is an incremental value or an absolute value.

5. Method according to any one of the preceding claims, **characterized in that** the value (72) of the initiated compressor pre-guide blade adjustment is an angle.

6. Method according to any one of the preceding claims, **characterized in that** the compressor pre-guide blade adjustment limit value (70) is
- an upper limit value (88-94) and the predefined condition is attaining or exceeding the upper limit value (88-94)
or
- a lower limit value (88-94) and the predefined condition is attaining or falling below the lower limit value (88-94).

7. Method according to any one of the preceding claims, carried out in each case for a plurality of successive points in time.

8. Method according to any one of the preceding claims, used to control a temperature (66) and/or a humidity (68) of the flow medium (6) flowing into the compressor (16) of the gas turbine system (2) in part load operation.

9. Method according to any one of the preceding claims, used to control operation of a gas turbine system in part load operation, in which
- one control variable is the temperature (66) and/or
- one control variable is the humidity (68),
- one actuating variable is the value (72) of the initiated compressor pre-guide blade adjustment and
- one control signal (80) actuates an anti-icing device (20) and/or
- one control signal (78) actuates an intake air heating device (12) and/or
- one control signal (76) actuates an evaporative cooler (10).

10. Arrangement (48) for controlling a gas turbine system (2) in part load operation,
**characterized by**
- an actuating device (50) set up in such a way that
- in a given operating state of a flow medium (6) flowing into a compressor (16) of the gas turbine system (2) a compressor pre-guide blade adjustment can be initiated
and
- a control arrangement (48) is set up in such a way that
- at least one temperature (66) and/or humidity (68) of the flow medium (6) flowing in can be determined in the operating state,
and
- a determining device (52) set up in such a way that
- depending on the determined temperature (66) and/or humidity (68) of the flow medium (6) flowing in, a compressor pre-guide blade adjustment limit value (70) can be determined and
- a value (72) of the initiable compressor pre-guide blade adjustment can be compared with the compressor pre-guide blade adjustment limit value (70) which is determined in operation,
and
- a control unit (54) set up in such a way that
- at least one measure can be initiated for changing the state (96, 98, 102-106) of the flow medium (6) flowing into the compressor (16) of the gas turbine system (2) in part load operation if the value (72) of the initiated compressor pre-guide blade adjustment fulfils a predefined condition in relation to the compressor pre-guide blade adjustment limit value (70) which is determined in operation.

11. Arrangement (48) according to Claim 10,
**characterized in that** the control unit (54) is prepared for actuating an anti-icing device (20) and/or an intake air heating device (12) and/or an evaporative cooler (10).

12. Gas turbine system (2) having a compressor pre-guide blade adjusting device (18),
**characterized by** an anti-icing device (20) and/or an intake air heating device (12) and an arrangement (48) according to Claim 10 or 11.

## Revendications

1. Procédé pour faire fonctionner une installation (2) de turbine à gaz dans un fonctionnement en charge partielle,
**caractérisé en ce que**
- pour un état de fonctionnement donné d'un fluide (6) en écoulement entrant dans un compresseur (16) de l'installation (2) de turbine à gaz, on déclenche un réglage d'aube de pré-rotation de compresseur pour le fonctionnement en charge partielle,
- on détermine au moins une température (66) et/ou une humidité (68) du fluide (6) en écoulement entrant dans l'état de fonctionnement,
- en fonction de la température (66) et/ou de l'humidité (68) déterminée du fluide (6) en écoulement entrant, on détermine une valeur (70) limite de réglage d'aube de pré-rotation du compresseur en fonctionnement,
- on compare une valeur (72) du réglage déclenché d'aube de pré-rotation du compresseur à la valeur (70) limite de réglage d'aube de pré-rotation du compresseur, qui a été déterminée et,
- si la valeur (72) du réglage déclenché d'aube de pré-rotation du compresseur, par rapport à la valeur (70) limite de réglage d'aube de pré-rotation du compresseur, qui a été déterminée en fonctionnement, satisfait une condition donnée à l'avance,
- on déclenche au moins une mesure de modification de l'état (96, 98, 102 à 106) du fluide (6) en écoulement entrant en fonctionnement en charge partielle dans le compresseur (16) de l'installation (2) de turbine à gaz.

2. Procédé suivant la revendication 1,
**caractérisé en ce que** la au moins une mesure provoque
- une élévation d'une température (66) et/ou
- une diminution d'une humidité (68)
du fluide (6) en écoulement entrant en fonctionnement en charge partielle dans le compresseur (16) de l'installation (2) de turbine à gaz.

3. Procédé suivant l'une des revendications précédentes,
**caractérisé en ce que** l'on provoque la au moins une mesure par
- une activation (78, 80)
- un dispositif (20) anti-icing et/ou
- un dispositif (12) de chauffage de l'air d'aspiration et/ou
- un dispositif de recyclage des gaz d'échappement de la turbine et/ou
- un dispositif de séchage de l'air d'
et/ou
- une désactivation (76)
- un evap-coolers (10) et/ou
- un compression-inlet-air-chiller et/ou
- un système d'injection d'eau.

4. Procédé suivant l'une des revendications précédentes,
**caractérisé en ce que** la valeur (72) de réglage déclenché d'aube de pré-rotation de compresseur est une valeur instrumentale ou une valeur absolue.

5. Procédé suivant l'une des revendications précédentes,
**caractérisé en ce que** la valeur (72) de réglage déclenchée d'aube de pré-rotation de compresseur est un angle.

6. Procédé suivant l'une des revendications précédentes,
**caractérisé en ce que** la valeur (70) limite de réglage d'aube de pré-rotation de compresseur est
- une valeur (88 à 94) limite supérieure et la condition donnée à l'avance est atteindre ou dépasser la valeur (88 à 94) limite supérieure
Ou
- une valeur (88 à 94) limite inférieure et la condition donnée à l'avance est atteindre ou passer en dessous de la valeur (88 à 94) limite inférieure.

7. Procédé suivant l'une des revendications précédentes, effectué respectivement à une pluralité d'instants successifs.

8. Procédé suivant l'une des revendications précédentes, utilisé pour régler une température (66) et/ou une humidité (68) du fluide (6) en écoulement entrant en fonctionnement en charge partielle dans le compresseur (16) de l'installation (2) de turbine à gaz.

9. Procédé suivant l'une des revendications précédentes, utilisé pour un réglage d'un fonctionnement d'une installation de turbine à gaz en fonctionnement en charge partielle, dans lequel
- une grandeur réglée à la température (66) et/ou
- une grandeur réglée à l'humidité (68)
- une grandeur réglante est la valeur (72) du réglage déclenché d'aube de pré-rotation de compresseur et
- un signal (80) de commande commande un dispositif (20) anti-icing et/ou
- un signal (78) de commande commande un dispositif (12) de chauffage de l'air d'aspiration et/ou
- un signal (76) de commande commande un evap-cooler (10).

10. Système de commande d'une installation (2) de turbine à gaz dans un fonctionnement en charge partielle,
**caractérisé par**
- un dispositif (50) de réglage est conçu de manière à ce que
- dans un état de fonctionnement donné d'un fluide (2) en écoulement entrant dans un compresseur (16) de l'installation (2) de turbine à gaz, un réglage d'aube de pré-rotation de compresseur peut être déclenché
et
- un système (48) de commande est conçu de manière
- à pouvoir déterminer, dans l'état de fonctionnement, au moins une température (66) et/ou une humidité (68) du fluide (6) en écoulement entrant,
Et
- un dispositif (52) de détermination est conçu, de manière
- à pouvoir déterminer, en fonction de la température (66) et/ou de l'humidité (68) déterminée du fluide (6) en écoulement entrant, une valeur (70) limite de réglage d'aube de pré-rotation de compresseur et
- à pouvoir comparer une valeur (72) du réglage pouvant être déclenché d'aube de pré-rotation de compresseur à la valeur (70) limite déterminée en fonctionnement du réglage d'aube de pré-rotation de compresseur
Et
- une unité (54) de commande est conçue de manière
- à pouvoir déclencher au moins une mesure de modification de l'état (96, 98, 102 à 106) du fluide (6) en écoulement entrant en fonctionnement en charge partielle dans le compresseur (16) de l'installation (2) de turbine à gaz, si la valeur (72) du réglage déclenché d'aube de pré-rotation de compresseur satisfait une condition donnée à l'avance par rapport à la valeur (70) limite de réglage d'aube de pré-rotation de compresseur, qui a été déterminée en fonctionnement.

11. Système (48) suivant la revendication 10,
**caractérisé en ce que** l'unité (54) de commande est conçue pour commander un dispositif (20) anti-icing et/ou un dispositif (12) de chauffage de l'air d'aspiration et/ou un evap-cooler (10).

12. Installation (2) de turbine à gaz, comportant un dispositif (18) de réglage d'aube de pré-rotation de compresseur,
**caractérisée par** un dispositif (20) anti-icing et/ou un dispositif (12) de chauffage de l'air d'aspiration et un système (48) suivant la revendication 10 ou 11.
